# EUROPEAN PATENT APPLICATION

(11) **EP 2 692 238 A1**
(43) Date of publication of application: **05.02.2014**
(21) Application number: 12179149.5
(22) Date of filing: 03.08.2012
(51) Int. Cl.: A23D 7/00

(54) **New fat blend composition**

(71) Applicant: Bunge Növényolajipari Zártköruen Muködo Részvénytársaság, 1134 Budapest (HU)
(72) Inventor: Piispa, Eija, 21530 Paimio (FI); Karlovits, Gyorgy, 88-100 Inowroclaw (PL)
(74) Representative: Maureau, Philippe

(57) **Abstract**

A new fat blend composition allowing the preparation of a fat spread composition lowering the cholesterol level in human beings, said fat blend comprising 20% or less of saturated fatty acids among which:
- 38% or less are palmitic acid (C16:0); and
- 20% or more of stearic acid (C18:0);
said fat blend being made at 5% to 100% of a hardstock containing from 5% to 100% of one or further hard fat and at least 5% of stearic acid.

A new hardstock composition comprising:
- from 20 to 100 % of one or further hard fat chosen as being a fully hydrogenated oil or a fractionated oil or fat containing more than 15% of stearic acid; and
- from 0% to 80% of one or further natural or fractionated oil or fat chosen among canola oil, sunflower oil, low erucic acid rapeseed oil, high oleic sunflower oil, soybean oil, corn oil, peanut oil, olive oil, high oleic canola oil, low linolenic soybean oil, high stearic sunflower oil, shea butter, cocoa butter and coconut fat.

## Description

The present invention relates to a new fat blend composition, a process for preparing the same and its use for preparing a low saturated fatty acids fat spread composition lowering the cholesterol level in human beings. The present invention also relates to a new hardstock composition.

Fat spreads, such as margarine, have been discovered for more than 100 years. They consist in a water-in-oil (or water-in-fat) emulsion, with tiny droplets of water dispersed uniformly throughout a fat phase which is partially in a crystalline form.

Emulsification is conducted at temperatures where fat blend and emulsifiers are in liquid forms. Water phase is added to liquid fat phase to achieve fat continuous emulsion. Final product obtained is a fat continuous spread. The obtained emulsion mixture is then crystallised and worked out to get the desired texture. Crystallization conditions mainly depend on the fat phase composition.

The water phase generally comprises water, milk, milk proteins, sour milk or other milk preparation or milk proteins, or a mixture thereof to which are added further water-soluble ingredients such as salt, preservatives, water-soluble flavours or pH regulation agents.

The fat phase, also designated as fat blend, generally comprises liquid or semi-liquid oils or fats and a structure forming fat that is commonly named as 'hardstock', to which are added further fat soluble ingredients such as emulsifiers, vitamins or fat soluble flavours.

The hardstock is generally solid at room temperature. In comparison to liquid oils, a hardstock contains higher quantities of saturated fats which are responsible for its structure forming properties. The final quantity of hardstock in the fat blend strongly influences the structure and texture of the fat spread.

Saturated fatty acids have no double bonds between the individual carbon atoms of the fatty acid chain. That is, the chain of carbon atoms is fully "saturated" with hydrogen atoms. In natural fats and oils saturated fatty acids occur mainly in form of triglycerides, that consist of glycerol backbone and 3 fatty acids, being saturated or unsaturated, thus amount of saturated fatty acids in triglyceride molecule is 0 to 3. There are many kinds of saturated fatty acids, which differ mainly in number of carbon atoms, from 3 carbon atoms (propionic acid - C3:0) to 36 carbon atoms (hexatriacontanoic acid - C36:0). Various fats contain different proportions of saturated fatty acids (also named SAFA), monounsaturated fatty acids (also named as MUFA) and polyunsaturated fatty acids (also named as PUFA).

Cholesterol is an organic chemical substance classified as a waxy steroid of fat. It is an essential structural component of mammalian cell membranes and is required to establish proper membrane permeability and fluidity. In addition to its importance within cells, cholesterol is an important component in the hormonal systems of the body for the manufacture of bile acids, steroid hormones, and vitamin D. Cholesterol is the principal sterol synthesized by animals; in vertebrates it is formed predominantly in the liver. Small quantities are synthesized in other cellular organisms (eukaryotes) such as plants and fungi. It is almost completely absent among prokaryotes, i.e. bacteria.

Although cholesterol is important and necessary for human health, high levels of cholesterol, especially of LDL-based cholesterol (frequently designated as "bad cholesterol") in the blood have been linked to damage to arteries and cardiovascular diseases.

Total fat intake plays a major role in blood cholesterol levels. In particular, monounsaturated and polyunsaturated fats have been shown to increase HDL-based cholesterol (frequently designated as "good cholesterol") levels, whereas saturated fats have been shown to increase both HDL- and LDL-based cholesterol levels.

Recently approved health recommendations exist for foods with a low or reduced content of saturated fat: "reducing consumption of saturated fat contributes to the maintenance of normal blood cholesterol levels". This recommendation makes no distinction between the various existing saturated fats.

Most of fat spreads currently on the market claiming the maintenance of cholesterol level in consumers contain about 20% to 30% of saturated fatty acids. This is for example the case of Vita Hjertego margarine or of Primevere margarine. Nevertheless, these margarines contain low amount of stearic acid (C18:0).

Similarly, US patent US 6,808,737 discloses a trans free hard structural fat made from selectively fractionated non-hydrogenated palm oil fraction, which is interesterified with dry fractionated non-hydrogenated palm kernel fraction. Such fat blends are used for the manufacture of low saturated fatty acids poly/mono unsaturated margarine and spreads. Fat spreads thus prepared contain low amount of saturated fatty acids but it contains high amount of palmitic acid (C16:0).

The European Food Safety Authority (EFSA) and the Food and Agriculture Organisation (FAO) have recently demonstrated that different saturated fatty acids have different effect on cholesterol levels.
In Fats and fatty acids in human nutrition - Report of an expert consultation, FAO Food and Nutrition Paper 91, 2008, there exist convincing evidences that:
- individual saturated fatty acids have different effects on the concentration of plasma lipoprotein cholesterol fractions. For example, lauric acid (C12:0), myristic acid (C14:0) and palmitic acid (C16:0) acids increase LDL-based cholesterol level whereas stearic acid (C18:0) has no effect on this level.
- replacing saturated fatty acids (C12:0 to C16:0) with polyunsaturated fatty acids decreases LDL-based cholesterol level and the total/HDL cholesterol ratio and that a similar but lesser effect is achieved by replacing such saturated fatty acids with monounsaturated fatty acids.
- replacing dietary sources of saturated fatty acids (C12:0 to C16:0) with carbohydrates decreases both LDL- and HDL-based cholesterol level but does not change the total/HDL cholesterol ratio; and
- replacing saturated fatty acids (C12:0 to C16:0) with trans-fatty acids decreases HDL-based cholesterol and increases the total/HDL cholesterol ratio.

For maximizing the lowering cholesterol effect of a fat spread, it would therefore be convenient to be able to prepare a fat spread containing:
- as little saturated fatty acids as possible,
- said saturated fatty acids comprising
   ➢ as little saturated fatty acids having 12 to 16 carbon atoms,
   ➢ and as much as stearic acid (C18:0) as possible,
   while maintaining an acceptable structure, texture and taste of said fat spread.

As it will be understood, the fat blend composition, and especially the hardstock composition, strongly influences the effect of final fat spread on the cholesterol level of consumers.

Classical hardstock is prepared with structuring hard fats such as palm oil and its fractions, coconut oil, palm kernel or mixtures thereof. This leads to hardstock containing high amounts of palmitic acid, generally more than 60%, and rather low amount of stearic acid, generally less than 5%.

International patent application WO-A-2002/41699 discloses the use Allanblackia fat or Pentadesma fat as a natural hardstock fat for spread manufacture. Such fats contain about 60% of stearic acid. Nevertheless, fat spread finally prepared contains more than 22% of saturated fatty acids. In addition, the sourcing of these oils is difficult as it grows only in specific areas of Africa.

Another way to increase stearic acid content in hardstock resides in the use of partially hydrogenated fats, such as partially hydrogenated soybean oil. Such fats generally contain 10% to 40% of stearic acid and have been used for preparing margarine due to their very good crystallization properties and storage stability. Nevertheless, such partially hydrogenated fats also contain increased levels of transfat known to increase cholesterol level.

Fully hydrogenated oils produced from liquid oils having originally high content of 18 carbon atoms length fatty acids (C18:0, C18:1, C18:2 and C18:3 fatty acids) such as rapeseed oil or sunflower oil can also be used for preparing hardstock. Nevertheless, such fully hydrogenated oils present the drawback in that they finally contain high amount of tristearin, a triglyceride derived from three units of stearic acid, which has very bad crystallisation properties, which is a problem for the final texture and stability of the fat spread, and very bad melting behaviour resulting in extremely slow melting characteristics of the final fat spread. Consequently, such fully hydrogenated oils cannot be used as the sole hard fat ingredient for preparing hardstock and then a fat spread.

To date, there remains a need for fat spreads containing as little saturated fatty acids as possible, said saturated fatty acids comprising as little saturated fatty acids having 16 carbon atoms or less as possible, and as much as stearic acid (C18:0) as possible, that can be used for preparing of fat spread allowing a decrease of cholesterol in consumers while evidencing acceptable structure, texture and taste.

It has now surprisingly been found that certain novel fat blend compositions may be used for preparing low saturated fatty acids fat spreads lowering the cholesterol level of consumers while maintaining an acceptable structure, texture and taste of said fat spread.

Accordingly, the present invention first relates to a fat blend composition comprising 20% or less of saturated fatty acids among which:
- 38% or less are palmitic acid (C16:0); and
- 20% or more of stearic acid (C18:0);
said fat blend being made at 5% to 100% of a hardstock containing from 5% to 100% of one or further hard fat and at least 5% of stearic acid.

The fat blend according to the present invention allows preparing a low saturated fatty acids fat spread composition lowering the cholesterol level in consumers while evidencing acceptable structure, texture and taste.

In the context of the present invention:
- "fat blend" designates blend of hardstock and oil or fat that can be used as such in processes where water in oil fat spreads are processed ('margarine process');
- "hardstock" designates fat part of fat blend that effects especially final product structure and enables fat blend crystallization in margarine production process to produce final products, fat spreads, that are solid, malleable emulsions of water in oil type;
- "fat spread" designates any product in the form of a solid, malleable emulsion, principally of the water-in-oil type, derived from solid and/or liquid vegetable and/or animal fats suitable for human consumption, with a milk-fat content which does not exceed 3% of the fat content. Preferably, "fat spread" designates margarine, three-quarter-fat margarine, half-fat margarine or fat spread X% as defined in Appendix to Annex XV of EC Regulation 1234/2007;
- "saturated fatty acid" and "saturated fat" both designate a saturated acid containing from to 3 to 36 carbon atoms and having no double bonds between the individual carbon atoms of the fatty acid chain (i.e. the chain of carbon atoms is fully "saturated" with hydrogen atoms) ;
- "hard fat" designates any fat being in a solid state at 10°C. It can be unhydrogenated, partially hydrogenated or fully hydrogenated. Preferably, "hard fat" designates any triglyceride being in a solid state at 10°C;
- "cholesterol level" designates the amount of low density lipoproteins (LDL) in the blood of a human being;
- "lowering cholesterol level" designates a decrease of LDL-based cholesterol level in the blood;
- unless otherwise specified, all % values are weight %.

The present invention relates to a fat blend comprising low amount of saturated fatty acids. Preferably, the present invention relates to a fat blend as defined above possessing the following characteristics, taken individually or in combination:
- the fat blend comprises 19% or less of saturated fatty acids, more preferably 18% or less of saturated fatty acids;
- 35% or less, more preferably 32% or less, even more preferably 30% or less of the saturated fatty acids are palmitic acid;
- 24% or more, more preferably 28% or more, even more preferably 32% or more of the saturated fatty acids are stearic acid;
- 3% or less, more preferably 2,5% or less, even more preferably 2% or less of the saturated fatty acids are lauric acid (C12:0);
- 1,5% or less, more preferably 1,3% or less, even more preferably 1% or less of the saturated fatty acids are myristic acid (C14:0) and/or
- the fat blend is made at 5% to 45%, more preferably at 10% to 25% of a hardstock as defined above.

According to the present invention, the fat blend is made at least partially of a hardstock as defined above. Preferably, the present invention relates to a fat blend as defined above in which the hardstock possesses the following characteristics, taken individually or in combination:
- the hardstock contains from 20% to 100%, more preferably of from 40% to 100%, even more preferably of from 60% to 100% of one or further hard fat;
- the hard fat is chosen as being:
   ➢ a fully hydrogenated oil among which fully hydrogenated low erucic acid rapeseed oil, fully hydrogenated high erucic rapeseed oil, fully hydrogenated canola oil, fully hydrogenated sunflower oil, fully hydrogenated high oleic sunflower oil, fully hydrogenated soybean oil, fully hydrogenated corn oil, fully hydrogenated peanut oil, fully hydrogenated walnut oil, fully hydrogenated hazelnut oil, fully hydrogenated olive oil, fully hydrogenated camelina oil, fully hydrogenated linseed oil, fully hydrogenated hemp oil, fully hydrogenated safflower oil, fully hydrogenated natural oil having altered fatty acid compositions via Genetically Modified Organisms (GMO) or traditional "breeding" such as high oleic oil, low linolenic oil and low saturate oil (high oleic canola oil, low linolenic soybean oil or high stearic sunflower oil), or a mixture thereof; and/or
   ➢ a fractionated oil or fat among which fractionated olive oil, fractionated shea butter, fractionated high stearic sunflower oil, fractionated cocoa butter, fractionated coconut fat, fractionated palm oil, fractionated milk fat or a mixture thereof;
   ➢ a natural hard fat among which cocoa butter, shea butter, milk bat, butter fat, palm oil, high stearic sunflower oil, coconut fat, or a mixture thereof; and/or
   ➢ an esterified oil or fat among which any mixture of any of the above mentioned fully hydrogenated, fractionated oil or fat that is chemically or enzymatically esterified;
   more preferably, the hard fat is chosen as being a fully hydrogenated oil, fractionated oil or fat, a natural hard fat, or a mixture thereof containing more than 15%, preferably more than 30%, more preferably more than 40% of stearic acid, among which fully hydrogenated low erucic acid rapeseed oil, fully hydrogenated high erucic acid rapeseed oil, fully hydrogenated sunflower oil, fractionated high stearic acid sunflower oil, fractionated shea butter, cocoa butter, or a mixture thereof;
- the hardstock further contains up to 80%, preferably up to 60%, even more preferably up to 40% of one or further natural oil and/or fat among which canola oil, sunflower oil, low erucic acid rapeseed oil, high oleic sunflower oil, soybean oil, corn oil, peanut oil, walnut oil, hazelnut oil, olive oil, camelina oil, linseed oil, hemp oil, safflower oil, varieties of "natural" oils having altered fatty acid compositions via Genetically Modified Organisms (GMO) or traditional "breeding" such as high oleic, low linolenic, or low saturated oils such as high oleic canola oil, low linolenic soybean oil or high stearic sunflower oil; and/or
- the hardstock contains more than 35%, more preferably more than 40%, even more preferably more than 45% of stearic acid.

More preferably, the present invention relates to a fat blend as defined above in which the hardstock is made of:
➢ 60% to 100 % of one or further fully hydrogenated oil or fractionated oil or fat containing more than 40% stearic acid chosen as being fully hydrogenated low erucic acid rapeseed oil, fully hydrogenated high erucic acid rapeseed oil, fully hydrogenated sunflower oil, fully hydrogenated soybean oil, fractionated high stearic acid sunflower oil and/or fractionated shea butter;
➢ esterified with up to 40% of one or further natural or fractionated oil or fat chosen as being canola oil, sunflower oil, low erucic acid rapeseed oil, high oleic sunflower oil, soybean oil, corn oil, peanut oil, olive oil, high oleic canola oil, low linolenic soybean oil, high stearic sunflower oil, shea butter, cocoa butter and/or coconut fat.

The fat blend according to the present invention may be made of further ingredients in addition to the hardstock as defined above. Accordingly, the present invention also relates to a fat blend as defined above further containing from 65% to 95%, preferably from 75% to 90%, of one or further oil.
Preferably, said further oil is chosen as being low erucic rapeseed oil, canola oil, sunflower oil, high oleic sunflower oil, soybean oil, corn oil, peanut oil, walnut oil, hazelnut oil, olive oil, camelina oil, linseed oil, hemp oil, safflower oil and varieties of "natural" oils having altered fatty acid compositions via Genetically Modified Organisms (GMO) or traditional "breeding" such as high oleic, low linolenic, or low saturated oils (high oleic canola oil, low linolenic soybean oil or high stearic sunflower oil), or a mixture thereof.
More preferably, said further oil is chosen as being liquid oil containing less than 15% saturated fat among which canola oil, sunflower oil, low erucic acid rapeseed oil, high oleic sunflower oil, soybean oil, corn oil, peanut oil, olive oil, high oleic canola oil or low linolenic soybean oil.

It is preferred that the fat blend according to the present invention is free of palm oil and its fractions and of palm kernel oil. Accordingly, the present invention also relates to a fat blend as defined above, said fat spread being free of palm oil and its fractions and of palm kernel.

It is a further preference that the fat blend according to the present invention contains low amount of trans fatty acids. Accordingly, the present invention also relates to a fat blend as defined above containing less than 5%, preferably less than 1% of trans fatty acids.

In addition to the above ingredients, the fat blend according to the present invention may further contain long chain omega-3 fatty acids from fish oil or algae oil sources.

The fat blend according to the present invention can be prepared according to classical processes known by the skilled artisan.

As explained above, the fat blend according to the present invention may be used to prepare fat spread lowering cholesterol level in consumers. Accordingly, the present invention also relates to a fat spread composition comprising from 10 to 90% of a fat blend as defined above.

Preferably, the present invention relates to a fat spread as defined above comprising from 15 to 85% of a fat blend as defined above. More preferably, the present invention relates to a fat spread comprising from 18 to 82% of a fat blend as defined above.

In addition to the fat blend, the fat spread according to the present invention may further contain some classical ingredients such as water; dairy components among which milk, cream, yogurt and quark; emulsifiers among which monoglycerides, diglycerides, lecithins, polyglycerol polyricinoleate, organic acid esters of fatty acids (such as E472a-f) and fatty acid polyglycerol esters; annatto or beta carotene; vitamin A; vitamin D; vitamin E; salt; citric acid; preservatives among which sorbic acid or its salts and EDTA; thickeners among which gelatine, starches and pectines; flavour agents; antioxidants such as tocopherols.

The fat spread according to the present invention can be prepared according to classical processes known by the skilled artisan. As an example, fat spread according to the present invention can be prepared by a process comprising the following steps:
- preparation of a concentrated water soluble ingredients such as salt, acids, thickeners, dairy solids, preservatives and flavour agents which are dissolved in water phase in the desired proportion in weighing tanks;
- emulsification of the thus obtained water phase and a fat blend according to the present invention in a stirring tank in a ratio of 10/90 to 90/10; or, alternatively, the fat blend according to the present invention and the water phase are mixed together by using a proportioning pump;
- heating the obtained emulsion to ensure a perfect microbiological safety to the finished product;
- cooling said emulsion in dedicated equipments under the melting point of the fat blend to allow crystallisation while submitting to high shear to allow development of tiny fat crystals necessary.

As explained above, hardstock compositions are mainly responsible for the quantities of saturated fats finally contained in the fat blend and in the fat spread and of structure and texture of said fat spread. Certain of the hardstock compositions used for preparing the fat blend according to the present invention are novel. Accordingly, the present invention also relates to a hardstock composition comprising:
- from 20 to 100 % of one or further hard fat chosen as being a fully hydrogenated oil or a fractionated oil or fat containing more than 15%, preferably more than 30%, more preferably more than 40% of stearic acid; and
- from 0% to 80 % of one or further natural or fractionated oil or fat chosen among canola oil, sunflower oil, low erucic acid rapeseed oil, high oleic sunflower oil, soybean oil, corn oil, peanut oil, olive oil, high oleic canola oil, low linolenic soybean oil, high stearic sunflower oil, shea butter, cocoa butter and coconut fat.

Preferably, the present invention relates to a hardstock as defined above possessing the following characteristics, taken individually or in combination:
- the hardstock contains from 40% to 100%, more preferably of from 60% to 100% of one or further hard fat;
- the hard fat contains more than 15% of stearic acid, more preferably more than 30% of stearic acid. Even more preferably, the hard fat is chosen as being a fully hydrogenated oil or a fractionated oil or fat that contains more than 40% of stearic acid such as fully hydrogenated low erucic acid rapeseed oil, fully hydrogenated high erucic acid rapeseed oil, fully hydrogenated sunflower oil, fully hydrogenated high oleic sunflower oil, fully hydrogenated soybean oil, fully hydrogenated corn oil or fractionated high stearic sunflower oil, fractionated shea butter, cocoabutter, or a mixture thereof; and/or
- the hardstock contains from 0% to 60 %, more preferably of from 0% to 40% of one or further natural or fractionated oil or fat as defined above.

It is preferred that the hardstock according to the present invention is free of palm oil and its fractions and of palm kernel oil. Accordingly, the present invention also relates to a hardstock as defined above, said hardstock being free of palm oil and of palm kernel oil.

Hardstock according to the present invention can be prepared according to classical processes known by the skilled artisan.

The present invention will now be illustrated in a non limiting-manner by the following examples.

### Example 1 - Process for preparing a fat blend composition according to the invention

Hardstock for the pilot scale experiments was prepared from refined and deodorised fat and oil raw materials by using chemical interesterification.

Chemically interesterified hardstock was further bleached and deodorised in pilot scale.

Fat blend for the fat spread pilot scale trials was prepared by blending deodorised hardstock with liquid oil.

Blending of oils was performed in temperature of 60°C, where all part of the fat blend are in liquid form.

### Chemical Interesterification

Chemical interesterification was performed in 2000 ml round-bottom flask with three necks. The central neck was connected to the suction pump. The second throat was inserted by thermometer to monitor the temperature of reaction. The third throat was covered by the lid.
Flask containing hardstock components and magnetic stirrer was put into the heated silicone oil bath, which was placed on the magnetic hot plate. Thermometer and suction pump were connected to the flask.
The fat was heated up to 117 °C and dried 1 hour with suction pump. After 1 hour of drying, the vacuum was revoked and the temperature was decreased to 90 °C. The catalyst, sodium methylate solution (30 % w/w) in amount 1.4% of fat and oil was then carefully added. The interesterification reaction time with catalyst was 30 min.
After 30 min of reaction, the interesterified fat was transferred to 2000 ml separating funnel and immediately washed with hot distilled water until the discharged water phase was neutral.
The neutralization was observed with phenolphthalein.
Washed interesterified fat was dried again under vacuum at 110 °C until bubbling stopped showing that esterified fat was dried.
Finally, the interesterified fats were filtrated through anhydrous sodium sulfate.

### Bleaching

The bleaching of obtained interesterified fat was carried out in a 7 liters pilot batch reactor by adding 0,5 % bleaching earth (Tonsil Standard 316FF).
The reaction was conducted at 90 °C for 30 min. Filter aid (Clarcel) was added 0,5 % and the temperature was decreased to 70 °C before filtration.
The filtration was done under N2 pressure (2 bars) in the reactor.
The filtered fat was directly transferred into the deodorizer for deodorization

### Deodorization

The interesterified fat was then deodorized in a 5 liters pilot batch reactor. The deodorization was carried out at 190 °C for 3 hours under vacuum of 3 mBars.
The total stripping steam consumption during deodorization was adjusted to 10 % based on the oil. After deodorization, the product was cooled down to 70 °C before transferring to a container.
The deodorized bleached interesterified fat was stored at 10 °C for fat spread trials.

In following examples 2 to 5, fat blend fatty acid composition data includes specified saturated fatty acid content, that is C12:0, C14:0, C16:0 and C18:0, as these fatty acids are defined as being critical fatty acids which amount needs to be controlled. Nonetheless, total amount of saturated fatty acids (SAFA) also includes other saturated fatty acids, such as C8:0, C10:0, C20:0.

### Example 2 - Fat blend 1 composition

A Fat blend 1 is prepared according to the process of example 1.

Composition of the obtained Fat blend 1 is reported in Table 1.1 below.

**Table 1.1 - Fat blend 1**

| **Ingredients** | **% (w/w)** |
|---|---|
| **Hardstock 1** (composition for interesterification) | **16%** |
| | |
| *Fully hydrogenated rapeseed oil* | *30%* |
| *Coconutfat* | *30%* |
| *Rapeseed oil* | *20%* |
| *Cocoa butter* | *20%* |
| **Liquid oil** | **84%** |
| | |
| *Low erucic acid rapeseed oil* | *100%* |

The exact content of Fat blend 1 in saturated fatty acids (SAFA), monounsaturated fatty acids (MUFA) and polyunstaturated fatty acids (PUFA) is reported in the below Table 1.2.

Fat blend 1 further contains 0,5% of trans fatty acids.

**Table 1.2 - Fat blend 1**

| **SAFA (%w/w)** | | | | **MUFA (%w/w)** | **PUFA (%w/w)** |
|---|---|---|---|---|---|
| *C12:0* | *C14:0* | *C16:0* | *C18:0* | | |
| *2,2* | *1,0* | *5,5* | *7,2* | **56,5** | **24,7** |
| **18,3** | | | | | |

### Example 3 - Fat blend 2 composition

A Fat blend 2 is prepared according to the process of example 1.

Composition of the obtained Fat blend 2 is reported in Table 2.1 below.

**Table 2.1 - Fat blend 2**

| **Ingredients** | **% (w/w)** |
|---|---|
| **Hardstock 2** (composition for interesterification) | **15%** |
| | |
| *Fully hydrogenated rapeseed oil* | *40%* |
| *Coconut fat* | *30%* |
| *Shea olein* | *30%* |
| **Liquid oil** | **85%** |
| | |
| *Low erucic acid rapeseed oil* | *100%* |

The exact content of Fat blend 2 in saturated fatty acids (SAFA), monounsaturated fatty acids (MUFA) and polyunstaturated fatty acids (PUFA) is reported in the below Table 2.2.

Fat blend 2 further contains 0,5% of trans fatty acids.

**Table 2.2 - Fat blend 2**

| **SAFA (%w/w)** | | | | **MUFA (%w/w)** | **PUFA (%w/w)** |
|---|---|---|---|---|---|
| *C12:0* | *C14:0* | *C16:0* | *C18:0* | | |
| *2,1* | *0,9* | *4,8* | *8,3* | **56,6** | **24,4** |
| **18,5** | | | | | |

### Example 4 - Fat blend composition

A Fat blend 3 is prepared according to the process of example 1.

Composition of the obtained Fat blend 3 is reported in Table 3.1 below.

**Table 3.1- Fat blend 3**

| **Ingredients** | **% (w/w)** |
|---|---|
| **Hardstock 3** (composition for interesterification) | **12%** |
| | |
| *Fully hydrogenated low erucic acid rapeseed oil* | *60%* |
| *Coconut fat* | *40%* |
| **Liquid oil** | **88%** |
| | |
| *Low erucic rapeseed oil* | *100%* |

The exact content of Fat blend 3 in saturated fatty acids (SAFA), monounsaturated fatty acids (MUFA) and polyunstaturated fatty acids (PUFA) is reported in the below Table 3.2.

Fat blend 3 further contains 0,5% of trans fatty acids.

**Table 3.2 - Fat blend 3**

| **SAFA (%w/w)** | | | | **MUFA (%w/w)** | **PUFA (%w/w)** |
|---|---|---|---|---|---|
| *C12:0* | *C14:0* | *C16:0* | *C18:0* | | |
| *2,2* | *1,0* | *4,9* | *8,2* | **56,0** | **24,8** |
| **18,7** | | | | | |

### Example 5 - Fat blend 4 composition

A Fat blend 4 is prepared according to the process of example 1.

Composition of the obtained Fat blend 3 is reported in Table 3.1 below.

**Table 4.1 - Fat blend 4**

| **Ingredients** | **% (w/w)** |
|---|---|
| **Hardstock 4** (composition for interesterification) | **9,5%** |
| | |
| *Fully hydrogenated low erucic acid rapeseed oil* | *60%* |
| *Coconut fat* | *40%* |
| **Liquid oil** | **90,5%** |
| | |
| *Low erucic acid rapeseed oil* | *100%* |

The exact content of Fat blend 4 in saturated fatty acids (SAFA), monounsaturated fatty acids (MUFA) and polyunstaturated fatty acids (PUFA) is reported in the below Table 4.2.

Fat blend 4 further contains 0,5% of trans fatty acids.

**Table 4.2 - Fat blend 4**

| **SAFA (%w/w)** | | | | **MUFA (%w/w)** | **PUFA (%w/w)** |
|---|---|---|---|---|---|
| *C12:0* | *C14:0* | *C16:0* | *C18:0* | | |
| *1,8* | *0,8* | *4,8* | *6,9* | **57,5** | **27,5** |
| **16,5** | | | | | |

### Example 5 - Fat spread

First, a fat phase made of all fat soluble ingredients and a water phase made of all water soluble ingredients including are prepared.

Compositions of fat phase and water phase are reported in Table 5 below.

Fat phase temperature has been heated at 55 °C and water phase at 60 °C. The emulsion was formed in a 3 liters emulsion tank by mixing water phase into fat phase.

The fat spread emulsion was then continuously crystallized by two scraping-blade surface heat exchangers at the condition 600 rpm and outlet temperature of 13°C to 15°C.

Finally, the products were packed in plastic cups and stored at 5°C.

Fat spreads A to F have been prepared according to the above process. Composition of the obtained Fat spreads is reported in Table 5 below.

**Table 5 - Fat spreads A to F**

| **Ingredients** | **Fat Spread** | | | | | |
|---|---|---|---|---|---|---|
| | **A** | **B** | **C** | **D** | **E** | **F** |
| ***FAT PHASE*** | | | | | | |
| Fat blend (F.b.) | 59,26% of F.b.1 | 39,49% of F.b.1 | 59,26% of F.b.2 | 49,26% of F.b.3 | 49,26% of F.b.4 | 39,49% of F.b.2 |
| DSM Beta - Carotene 30% FS | 0,002% | 0,002% | 0,002% | 0,002% | 0,002% | 0,002% |
| Palsgaard DMG 0291 | 0,40 % | 0,40 % | 0,40 % | 0,40 % | 0,40 % | 0,40% |
| Grindsted PGPR 90 Kosher | - | 0,10 % | - | - | - | 0,10% |
| Sunflower lecithin | 0,33 % | - | 0,33 % | 0,33 % | 0,33 % | - |
| Fat soluble flavor Firmenich Butter T05282 | 0,004% | 0,004% | 0,004% | 0,004% | 0,004% | 0,004% |
| ***Total Fat*** | ***60,00 %*** | ***40,00%*** | ***60,00%*** | ***50,00%*** | ***50,00%*** | ***40,00%*** |

| ***WATER PHASE*** | | | | | | |
|---|---|---|---|---|---|---|
| Water | 39,65 % | 59,65 % | 39,65 % | 49,65 % | 49,65 % | 59,65% |
| Salt | 0,30 % | 0,30 % | 0,30 % | 0,30 % | 0,30 % | 0,30% |
| Citric acid | 0,03 % | 0,0 3% | 0,03 % | 0,03 % | 0,03 % | 0,03% |
| Water soluble flavor Firmenich Butter T04965 | 0,007 | 0,007 | 0,007 | 0,007 | 0,007 | 0,007 |
| | | | | | | |
| **Total** | **100,00 %** | **100,00 %** | **100,00 %** | **100,00 %** | **100,00 %** | **100,00%** |

### Example 6 - Evaluation of effect on cholesterol

### Method of evaluation

Effect of each of the above fat spread compositions A to F on the cholesterol level has been evaluated using the calculation method reported by European Food Safety Administration (EFSA) in Table 3 (Estimated effects for the change in serum lipids and lipoproteins for a group of subjects when one percent of energy in the diet from carbohydrates is replaced isocalorically by a particular fatty acid) of the Opinion of the Scientific Panel on Dietetic Products, Nutrition and Allergies on a request from the Commission related to the presence of trans fatty acids in foods and the effect on human health of the consumption of trans fatty acids, EFSA Journal (2004), 81, 1-49.

According to this method, the calculation of cholesterol lowering effect of fat blend can be determined using the following formula:
➢ Total cholesterol (TC) mmol/L change = +0,031*trans-monounsatureated fatty acids +0,069*lauric acid +0,059*myristic acid +0,041*palmitic acid - 0,01*stearic acid - 0,006*cic-monounsaturated fatty acids - 0,021*cis polyunsaturated fatty acids.
➢ LDL mmol/L change = +0,040*trans-monounsatureated fatty acids + 0,052*lauric acid + 0,048*myristic acid + 0,039*palmitic acid - 0,004*stearic acid - 0,009*cic-monounsaturated fatty acids - 0,019*cis polyunsaturated fatty acids.

### Results 1

Cholesterol lowering effect has been evaluated on the basis of a 100% fat which represents cholesterol lowering effect of fat blend. This effect can be calculated also for fat blends like butter fat giving opportunity to compare different fat blends effect on cholesterol levels.

The obtained results are reported in the Table 6 below.

**Table 6**

| **Fat 100%** | **SAFA** | **TC change (mmol/L)** | **LDL change (mmol/L)** |
|---|---|---|---|
| Fat blend 1 | 18,3 | -0,48 | -0,61 |
| Fat blend 2 | 18,5 | -0,53 | -0,65 |
| Fat blend 3 | 18,7 | -0,52 | -0,64 |
| Fat blend 4 | 16,5 | -0,57 | -0,70 |
| *Butter fat* | *68,8* | *1,82* | *1, 61* |
| *Fat blend from Beviva 50%* | *31,4* | *0,52* | *0,30* |
| *Fat blend from Primevere Leger 25%* | *20,9* | *-0,05* | *-0,25* |
| *Fat blend from Vita Hjertego 70%* | *22,4* | *-0,36* | *-0,44* |

Fat blends according to the present invention all induce a decrease of total cholesterol and LDL-based cholesterol levels whereas a classical butter fat composition induces an increase of total cholesterol and LDL-based cholesterol levels.

In addition, fat blends according to the present invention induce a significantly stronger decrease of total cholesterol and LDL-based cholesterol levels in comparison to fat blends used for preparing available commercial fat spreads.

### Results 2

In human beings, it is generally considered that serum total cholesterol level should be lower than 5 mmol per liter whereas LDL-based cholesterol level should be lower than 3 mmol per liter.

It is generally considered that a lowering cholesterol effect can be claimed for a product if it allows a decrease cholesterol level of at least 7% to 10%.

The amount of fat blend (in grams) needed for lowering total cholesterol level and LDL-based cholesterol level of 10% has been calculated considering that initial levels of serum cholesterols were of
➢ 5 mmol of total cholesterol per liter;
➢ 6 mmol of total cholesterol per liter;
➢ 3 mmol of LDL-based cholesterol per liter; and
➢ 3,5 mmol of LDL-based cholesterol per liter.

The obtained results are reported in the Table 7 below.

**Table 7**

| **Fat blend** | **SAFA** | **Amount (g) of fat blend needed for 10% TC reduction** | | **Amount (g) of fat blend needed for 10% LDL reduction** | |
|---|---|---|---|---|---|
| | | **Initial level 5 mmo/l** | **Initial level 6 mmo/l** | **Initial level 3 mmo/l** | **Initial level 3,5 mmo/l** |
| Fat blend 1 | 18,3 | 104 | 125 | 49 | 57 |
| Fat blend 2 | 18,5 | 94 | 113 | 46 | 54 |
| Fat blend 3 | 18,7 | 96 | 115 | 47 | 55 |
| Fat blend 4 | 16,5 | 88 | 105 | 43 | 50 |
| *Fat blend from Beviva 50%* | *31,4* | - | - | - | - |
| *Fat blend from Primevere Leger 25%* | *20,9* | *1000* | *1200* | *120* | *140* |
| *Fat blend from Vita Hjertego 70%* | *22,4* | *139* | *167* | *68* | *80* |
| *Butter fat* | *68,8* | - | - | - | - |

| | | | | | |
|---|---|---|---|---|---|
| - : no cholesterol lowering effect | | | | | |

The amount of fat blend (in grams) needed for lowering total cholesterol level and LDL-based cholesterol level of 10% is much more important with fat blends used for preparing available commercial fat spreads than with fat blend composition according to the present invention.

Fat blends according to the present invention therefore induce a significantly stronger decrease of total cholesterol and LDL-based cholesterol levels than fat blends used for preparing available commercial fat spreads.

### Example 7 - Sensory expert panel evaluation

Sensory evaluation of the fat spreads A to F was done by margarine expert panel of 6 panellists.

Results show that all fat spreads A to F have smooth spreadable structure, there is no oil or water separation, no sandiness or brittleness in spreading.

In addition, all samples have been described as having slight butter flavour and as possessing quick melting characteristics.

Thus, despite fat spreads according to the invention contains less than 20% of saturated fatty acids, they possess solid, malleable emulsion structure that is characteristic to fat spreads definition according Appendix to Annex XV of EC Regulation 1234/2007.

## Claims

1. A fat blend composition comprising 20% or less of saturated fatty acids among which:
- 38% or less are palmitic acid (C16:0); and
- 20% or more of stearic acid (C18:0);
said fat blend being made at 5% to 100% of a hardstock containing from 5% to 100% of one or further hard fat and at least 5% of stearic acid.

2. Fat blend according to claim 1, **characterised in that** 32% or less of saturated fatty acids are palmitic acid.

3. Fat blend according to claim 1 or 2, **characterised in that** 28% or more of saturated fatty acids are stearic acid.

4. Fat blend according to any of claims 1 to 3, **characterised in that** 3% or less of saturated fatty acids are lauric acid.

5. Fat blend according to any of claims 1 to 4, **characterised in that** 1,5% or less of saturated fatty acids are myristic acid.

6. Fat blend according to any of claims 1 to 5, **characterised in that** it is made at fat blend is made at 5% to 45% of hardstock.

7. Fat blend according to any of claims 1 to 6, **characterised in that** the hard fat is chosen as being a fully hydrogenated oil, a fractioned oil or fat, an esterified oil or fat, or a mixture thereof.

8. Fat blend according to claim 7, **characterised in that** the hard fat is chosen as being fully hydrogenated low erucic acid rapeseed oil, fully hydrogenated high erucic acid rapeseed oil, fully hydrogenated sunflower oil, fractionated high stearic acid sunflower oil, fractionated shea butter, cocoa butter, or a mixture thereof.

9. Fat blend according to any of claims 1 to 8, **characterised in that** the hardstock further contains up to 80% of one or further natural oil and/or fat chosen as being canola oil, sunflower oil, low erucic acid rapeseed oil, high oleic sunflower oil, soybean oil, corn oil, peanut oil, walnut oil, hazelnut oil, olive oil, camelina oil, linseed oil, hemp oil, safflower oil, high oleic canola oil, low linolenic soybean oil or high stearic sunflower oil

10. Fat blend according to any of claims 1 to 6, **characterised in that** the hardstock is made of:
➢ 60% to 100 % of one or further fully hydrogenated oil or fractionated oil or fat containing more than 40% stearic acid chosen as being fully hydrogenated low erucic acid rapeseed oil, fully hydrogenated high erucic acid rapeseed oil, fully hydrogenated sunflower oil, fully hydrogenated soybean oil, fractionated high stearic acid sunflower oil and/or fractionated shea butter;
➢ esterified with up to 40% of one or further natural or fractionated oil or fat chosen as being canola oil, sunflower oil, low erucic acid rapeseed oil, high oleic sunflower oil, soybean oil, corn oil, peanut oil, olive oil, high oleic canola oil, low linolenic soybean oil, high stearic sunflower oil, shea butter, cocoa butter and/or coconut fat.

11. Fat blend according to any of claims 1 to 10, **characterised in that** it further contains from 65% to 95% of one or further oil.

12. Fat blend according to claim 11, **characterised in that** the further oil contained in the fat blend is chosen as being canola oil, sunflower oil, low erucic acid rapeseed oil, high oleic sunflower oil, soybean oil, corn oil, peanut oil, olive oil, high oleic canola oil or low linolenic soybean oil.

13. Fat blend according to any of claims 1 to 12, **characterised in that** it is free of palm oil and its fractions and of palm kernel oil.

14. Fat blend according to any of claims 1 to 13, **characterised in that** it contains less than 5% of trans fatty acids.

15. A fat spread composition comprising from 10 to 90% of a fat blend as defined in any of claim 1 to 14.

16. A hardstock composition comprising:
- from 20 to 100 % of one or further hard fat chosen as being a fully hydrogenated oil or a fractionated oil or fat containing more than 15% of stearic acid; and
- from 0% to 80 % of one or further natural or fractionated oil or fat chosen among canola oil, sunflower oil, low erucic acid rapeseed oil, high oleic sunflower oil, soybean oil, corn oil, peanut oil, olive oil, high oleic canola oil, low linolenic soybean oil, high stearic sunflower oil, shea butter, cocoa butter and coconut fat.

17. Hardstock according to claim 16, **characterised in that** it is free of palm oil and its fractions and of palm kernel oil.
